# EUROPEAN PATENT APPLICATION

(11) **EP 2 587 104 A1**
(43) Date of publication of application: **01.05.2013**
(21) Application number: 11186342.9
(22) Date of filing: 24.10.2011
(51) Int. Cl.: F16K 31/124, F16K 31/383

(54) **A valve**

(71) Applicant: Novenco Fire Fighting A/S, 4700 Næstved (DK)
(72) Inventor: Knudsen, Hans Brun, 6000 Kolding (DK); Holberg, Martin, 4242 Boeslunde (DK); Christensen, Erik, 5220 Odense (DK)
(74) Representative: Trier, Mikkel Roed

(57) **Abstract**

A valve for opening and closing a main passage, comprising: a valve housing (61,75) and chamber (71); a main valve body (73) accommodated inside the chamber (71); a fluid inlet (10) and outlet (69), the main valve body (73) having a closing and opening position, the main valve body (73) dividing the chamber (71) into a first (97) and second (99) chamber portion, the fluid inlet (10) being in fluid connection with the first chamber portion (97); a first passage (97,151,111,133,27a,131,155,153) between the fluid inlet and the second chamber portion; a second valve body (139) having an opening and a closing position; and a second passage (153,155,131,127b,135) out of the second chamber portion (99), the second passage being open when the second valve body (139) is in its opening position. The second valve body (139) is placed at the first passage between the fluid inlet and the second chamber portion. The first passage being blocked when the second valve body is open, and the first passage being open when the second valve body is closed.

## Description

The present invention relates a valve for opening and closing a fluid main passage, comprising: a valve housing with a valve chamber; a main valve body accommodated inside the valve chamber; a fluid inlet; a fluid outlet, the main valve body being movable between a closing position closing the fluid main passage and an opening position, the main valve body dividing the valve chamber into a first valve chamber portion and a second valve chamber portion, the fluid inlet being in fluid connection with the first valve chamber portion; a first passage between the fluid inlet and the second chamber portion; a second valve body movable between an opening position and a closing position of said second valve body; and a second passage out of the second valve chamber portion, said second passage being open when the second valve body is in its opening position.

Valves of this art are known e.g. from US-A-4 848 721, US-A-5 048 790 and US-A-5 529 387, which all disclose valves having a restricted opening constituting part of the first passage. Due to the first passage fluid enters the second valve chamber portion, and if the second passage is closed pressure builds up that force the main valve body towards a valve seat to close the valve. Thus the valve chamber and the main valve body are configured so that the areas of the main valve body is exposed to the fluid pressure in the second valve chamber portion and the first valve chamber portion, at least when the valve is closed, result in a net force is acting on the main valve body to keep it in its closed position, when the pressure of the fluid at the inlet is fully present in the second valve chamber portion. A spring may be present to assist moving the main valve body from an opening position to the closing position. The second valve body opens and closes the second passage thus allowing the pressure in the second valve chamber portion to escape when opening the second passage whereby the main valve body raises from the seat to open the fluid main passage. These prior art valves are all operated by means of solenoids activating the second valve body.

A problem of these prior art valves is that due to small dimensions of the restricted opening impurities present in the fluid controlled by the valve may tend to block the restricted opening thus preventing proper function of the valve.

US-A-3 428 090 gives an example of a pneumatically operated valve.

In certain applications e.g. fire-fighting equipment in ships, especially local fire-fighting equipment, impurities in a fire-fighting liquid is a problem in case of valves of the above art. Further the environments e.g. in engine rooms in ships, where local fire-fighting equipment is used, are corrosive.

It is an object of the present invention to provide a valve that avoids the above mentioned problem of prior art valves.

This is achieved in a valve wherein said second valve body is placed at said first passage between the fluid inlet and the second valve chamber portion, said first passage being blocked when the second valve body is in its opening position, and said first passage being open when the second valve body is in its closing position. Hereby is obtained that the first passage need not comprise (permanently) restricted openings that tend to be blocked by impurities.

It should be noted that the terms opening position and closing position in relation to the second valve body refer to positions of the second valve body in which the valve opens and closes the fluid main passage, respectively.

When the valve is closed any leak from the second valve chamber portion should be small and preferably the second valve chamber portion is closed apart from the passage to the fluid inlet.

Thus in one embodiment the valve comprises a vent comprising at least one aperture, said vent forming part of the first passage from the fluid inlet to the second valve chamber portion, when the second valve body is in its closing position, the second valve body blocking in its opening position passage from the fluid inlet to said vent while allowing passage from said vent to a space in the valve blocked from the passage to the fluid inlet, said space being in fluid connection with the surroundings of the valve, said vent and said space thereby constituting at least part of second passage. Hereby is obtained that the vent, when the second valve body is in its closing position, serves to connect the second valve chamber portion with the fluid inlet for pressure to build up in the second valve chamber portion in order to move the main valve body to its closing position, and when the second valve body is in its opening position, serves to relieve the pressure in the second valve chamber portion to the surroundings of the valve.

In a further embodiment the valve comprises a hollow element with a wall, the second valve body being accommodated in the hollow element to divide an internal space of the hollow element into a first part and a second part, said vent being present in the wall of the hollow element, the second valve body providing in its closing position for connection between the vent and said first part, and the second valve body providing in its opening position for connection between the vent and said second part. In a still further embodiment the hollow element is a tubular element having an axis, the second valve body being axially slidable in the tubular element, to expose the vent to said first part of the internal space or to the second part of the internal space, which constitutes said space in the valve blocked from the passage to the fluid inlet. Hereby a simple construction is obtained.

In one embodiment a fluid actuated actuating element is connected to the second valve body for moving the second valve body between its opening and closing positions. This provides an alternative to electric activation which in some applications may be undesirable.

In a further embodiment the actuating element comprises a piston. Hereby a simple construction is obtained.

In a further embodiment where the valve comprises a tubular element accommodating the second valve body the piston is slidably accommodated in the tubular element and slidably sealed against the wall of the tubular element. Hereby a further simple construction is obtained.

In a further embodiment the tubular element in sequence along its axis: accommodates the piston; comprises a second vent; comprises the first vent; comprises a through opening in fluid connection with the fluid inlet; and comprises a third vent in fluid connection with the surroundings of the valve, and that an elongate pilot element is accommodated in the tubular element and comprises: the piston; the second valve body situated near the first vent; and a third valve body situated near the third vent to open said third vent towards the first part of the internal space of the tubular element when the second valve body is in its opening position and to block the third vent from the first part of the internal space of the tubular element when the second valve body is in its closing position. Hereby on one hand a simple construction is obtained and on the other hand the third valve body and the third vent provide for pressure relief of the first part of the internal space of the tubular element when the first passage is blocked while the second vent provides for communication of the second passage with the surroundings.

In a further embodiment the tubular element is at one end adjacent the piston closed by a manually actuated slidable plug element. Hereby a possibility of manual actuation of the valve is obtained e.g. for the case that automatic fluid actuation should fail.

In one embodiment the valve housing comprises a first tubular member, the main valve body comprises a second tubular member having a first end with a first end face, a second end and a circumferential wall, the first valve chamber portion being defined by the circumferential wall and the second valve chamber portion being defined by the first end face. Hereby is obtained that substantial parts of the valve may be constructed from plastic material preferably fibre reinforced and durable in a corrosive environment at relatively low costs.

In a further embodiment comprising a tubular element accommodating slidably the second valve body, the tubular element extends axially through the second tubular member to form an annular space there between, said annular space being closed adjacent the second end, a coaxial annular wall member of the valve housing extending slidably into the annular space in a sealing manner. This embodiment further facilitates construction of the valve from plastic material.

In a further embodiment where the tubular element accommodates an elongated pilot element a second through opening is provided in the second tubular member to constitute a part of the first passage, the first through opening constituting another part of the first passage. Hereby a simple construction is obtained.

In an embodiment said second end rests, possibly through a sealing element, at a valve seat to close the fluid main passage when the main valve body is in its closing position.

In the following the invention will be explained in more detail by way of example with reference to the accompanying drawing, in which
Fig. 1 shows an embodiment of a fire-fighting system,
Fig. 2 is a diagram of the fire-fighting system of Fig. 1,
Fig. 3 shows diagrammatically an embodiment of a compressor used in the fire-fighting of Fig. 1,
Fig. 4 is a perspective view of an embodiment of a valve according to the invention,
Fig. 5 is a side view of the valve of Fig. 4,
Fig. 6 is a top view of the valve of Fig. 4,
Fig. 7 shows a section along line VII-VII in Fig. 6,
Fig. 8 shows a section along line VIII-VIII in Fig. 6, and
Fig. 9 is a view corresponding to Fig. 8 but showing a part of the valve in another position.

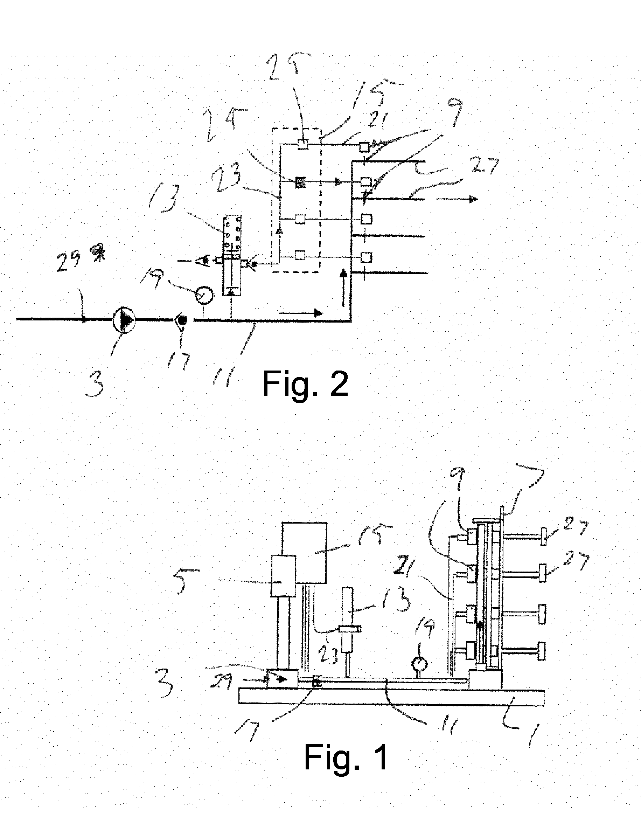

The fire-fighting system shown in Figs. 1 and 2 comprises a chassis 1 carrying a pump 3 driven by a motor 5, a stand 7 carrying a number of valves 9, four valves 9 in the present embodiment, a fluid conduit 11 connecting the pump 3 and the valves 9, a compressor 13 and a control system 15. As indicated the fluid conduit 11 comprises a check valve 17 and a manometer 19.

Second fluid conduits 21 connect the control system 15 and the valves 9. A third fluid conduit 23 connects the compressor 13 and the control system 15. The control system 15 comprises solenoid valves 25 feed through the third conduit 23 to direct when actuated fluid pressure to the valves 9.

The valves 9 each comprise a connector 27 for connecting the respective valve with e.g. a nozzle (not shown).

The pump 3 comprises a connector 29 for connecting the pump to a reservoir of fire-fighting fluid, preferably fire-fighting liquid, such as water, e.g. a water tank or water container (not shown).

Being build on a chassis 1 the fire-fighting system is mobile and can be manufactured in a factory to be transported to a place of use where the connectors 27 and 29 are connected with e.g. pipes or hoses leading to nozzles and a water container, respectively.

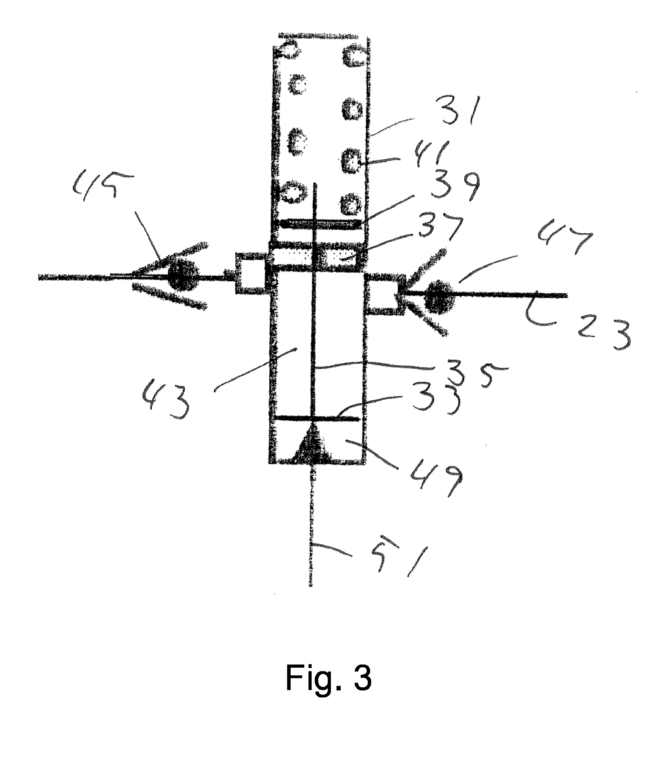

In the embodiment shown in Fig. 3 the compressor 13 has a simple construction comprising a cylinder 31 with a piston 33, a piston rod 35 extending in a sealing manner through a partition 37 in the cylinder 31 to an abutment 39 for a spring 41 housed in a closed end of the cylinder 31. An air space 43 of the cylinder 31 between the piston 33 and the partition 37 is connected to the ambient air through a second check valve 45 and to the third fluid conduit 23 through a third check valve 47. A liquid space 49 of the cylinder 31 opposite the piston 33 relative to the air space 43 is connected to a branch 51 of the fluid conduit 11.

The compressor 13 works as follows:

When the pump 3 is not running pressure in the fluid conduit 11 is low and the spring 41 drives the piston away from the partition 37 expanding the air space 43, ambient air being sucked in through the second check valve 45. When subsequently the pump 3 is activated pressure rises in the fluid conduit 11 and fire-fighting liquid enters the cylinder 31 driving the piston 33 towards the partition 37 whereby the air in the air space 43 is compressed and is driven out through the third check valve 47 to the extend it is possible due to the pressure rising correspondingly in the third fluid conduit 23 downstream of the third check valve 47.

The fire-fighting system works as follows:

The fire-fighting system may e.g. be installed in an environment, such as an engine room, divided into fire-protection sections each comprising a fire-alarm and a nozzle, such as a fog spray nozzle, for spreading fire-fighting fluid, or more nozzles grouped together, whereby each valve 9 is connected to a respective nozzle or group of nozzles.

When the fire-fighting system is not activated, e.g. due to the apparent absence of a fire, the motor is not energised and the fluid conduit 11 I and the compressor 13 are pressure-less.

When a fire-alarm is released the control system 15 energises the motor 5 to drive the pump 3, whereby the pressure in the fluid conduit 11 rises providing for pressurised fire-fighting fluid at the valves 9. Also the pressurised fluid in the fluid conduit 11 activates the compressor 13 as explained above providing for pressurised air. The control system 15 further activates the relevant valve or valves 9 by opening the relevant solenoid valve(s) 25 sending fluid or air pressure to the valves in question provoking the same to open. Thereby the pressurised fire-fighting fluid is allowed to the respective nozzles.

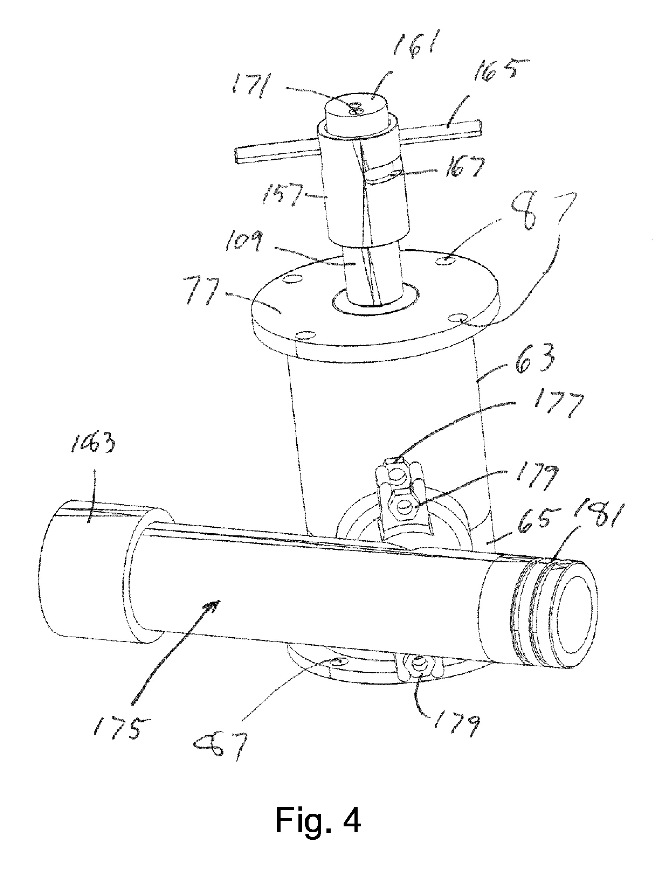

Figs. 4 to 9 show an embodiment of the valve 9.

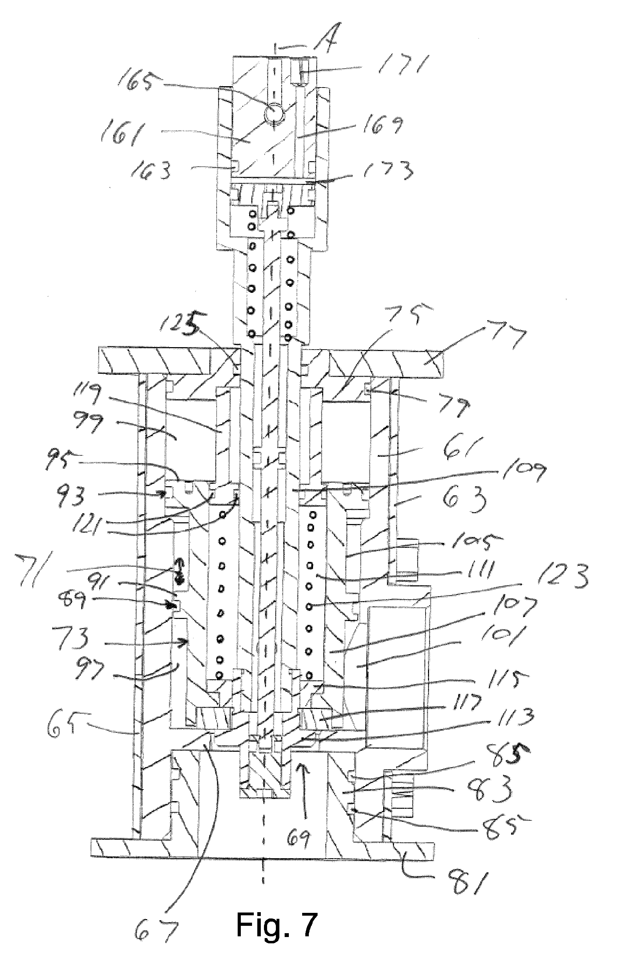

In the following "up", "upper", "down", "lower", "above", "below", etc. relates to the position of the valve shown in Figs. 7 to 9.

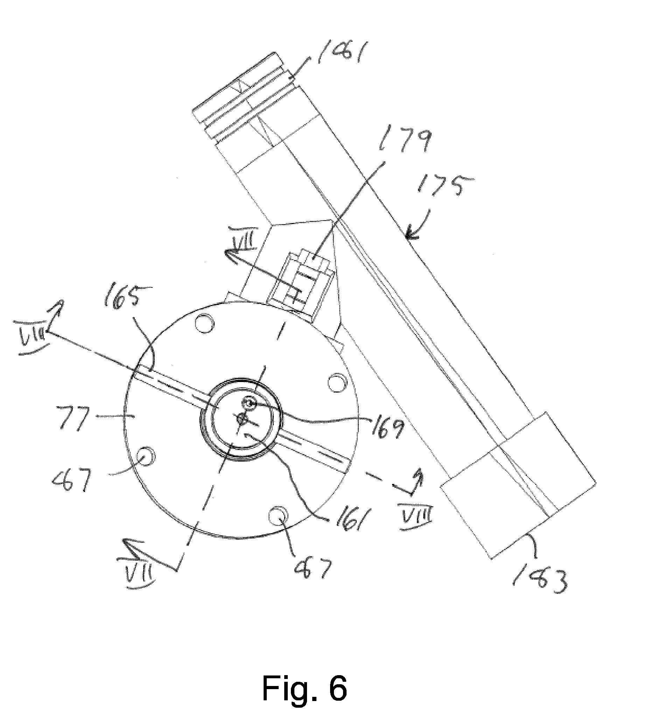

The valve has a valve housing comprising a tubular valve housing member 61, which in an embodiment is made of plastic material such as glass fibre reinforced polyamide, surrounded by a cylindrical steel mantel having an upper section 63 and a lower section 65. The valve housing member 61 has an axis A and comprises a partition 67 having a through hole constituting a fluid outlet 69. Above the partition 67 a valve chamber 71 is provides, which accommodates a main valve body 73. The valve housing further comprises a sealing member 75, which is secured by an upper flange member 77, to close an upper end of the valve housing member 61. The sealing member 75 is sealed against the valve housing by an O-ring (not shown) accommodated in a groove 79. At the lower end of the valve housing member 61 a lower flange member 81 with a tubular portion 83 is provided. The tubular portion 83 is sealed against the valve housing member 61 by means of O-rings (not shown) accommodated in grooves 85. The upper and lower flange members 77, 81 are secured by stay bolts (not shown) extending through opposite holes 87 (see Figs. 4 and 6) in the flange members 77, 81.

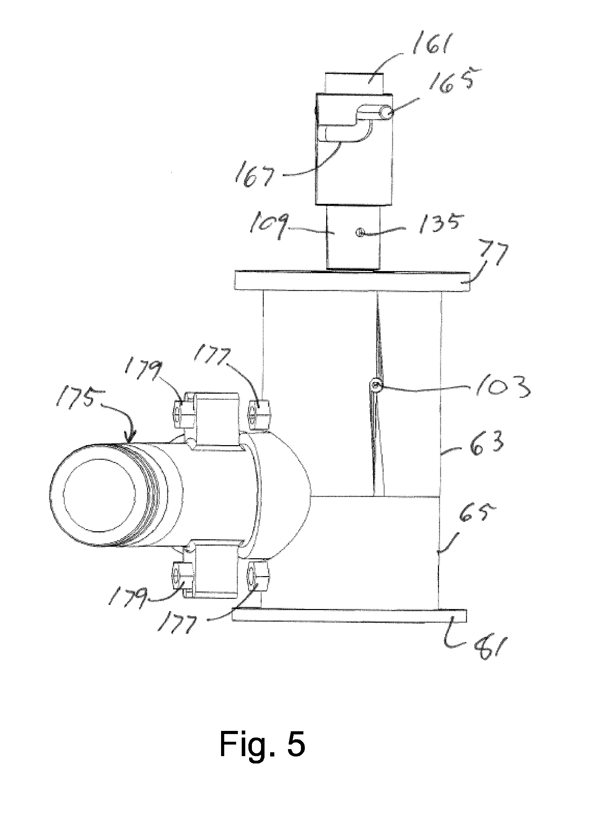

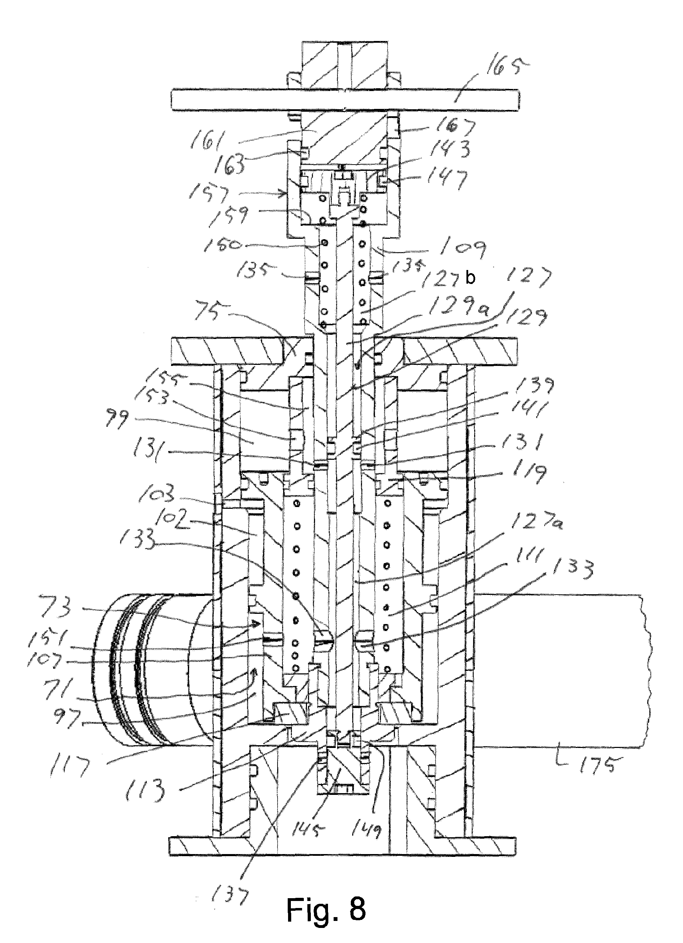

The valve chamber 71 has a lower section with a smaller diameter and an upper section with a larger diameter. In the lower section the main valve body 73 has a first seal 89 provided by an O-ring (not shown) accommodated in a circumferential groove in a circumferential projection 91. In the upper section the main valve body 73 has a second seal 93 provided by an O-ring accommodated in a groove of a flange like portion 95 of the main valve body 73. The flange like portion 95 provides a first end face of the main valve body 73. The first seal 89 defines a first valve chamber portion 97 below the circumferential projection 91, and the second seal 93 defines a second valve chamber portion 99 above the flange like portion 95. An opening in the valve housing 61 provides a fluid inlet 101 (see Fig. 7) opening into the first valve chamber portion 97. A dead space portion 102 of the valve chamber between the first seal 89 and the second seal 93 is vented towards the surroundings through a dead space vent 103 (see Figs. 5 and 8) in the valve housing 61.

The main valve body 73 comprises second tubular member 105 with a circumferential wall 107 carrying at an intermediate position the circumferential projection 91 and carrying at a first end the flange like portion 95. A tubular element 109 extends coaxially through the second tubular member 105 providing an annular space 111 therebetween. At a second end of the second tubular member opposite the first end, the second tubular member 105 and the tubular element 109 are interconnected by an end member 113 attached to the tubular element 109 and an annular connecting element 115 between the end member 113 and the second tubular member 105, thus closing the annular space 111 at said second end. At the second end of the second tubular member 105 between the latter and the end member 113 an annular sealing element 117 is provided.

A coaxial annular wall member 119 is suspended from the sealing member 75 and extends into the annular space 111. The annular wall member 119 is sealed in a slidable manner against the second tubular member 105 as well as against the tubular element 109 through O-rings (not shown) accommodated in respective grooves 121. A compression spring 123 is accommodated in the annular space 111 and forces the main valve body 73 downwards due to abutment against the annular connecting element 115 and the annular wall member 119. Thus the compression spring 123 forces the sealing element 117 of the main valve body against a valve seat provided by the edge of the through hole in the partition 67 as seen in Figs. 7 to 9.

The sealing member 75 is sealed against the tubular element 109 in a slidable manner through an O-ring (not shown) accommodated in a groove 125.

The tubular element 109 together with the end member 113 comprises an internal space 127 accommodating an elongated pilot element 129. The wall of the internal space 127 comprises a number of through openings, namely a vent 131 placed above the O-rings of the coaxial annular wall member 119 and comprising in the present embodiment two opposite apertures, through openings 133 connecting the internal space 127 with the annular space 111, a second vent 135 placed outside the valve housing on the opposite side of the sealing member 75 relative to the main valve body 73, etc., and a third vent 137 provided in the end member 113 below the sealing member 117 i.e. outside the valve chamber 71, at least when the main valve body 73 is in its closing position as shown in Figs. 7 to 9.

The elongate pilot element 129 comprises a central rod 129a carrying a second valve body 139 comprising a groove 141 accommodating an O-ring (not shown) sealing in a slidable manner the second valve body 139 against the wall of the internal space 127, a piston element 143 at an upper end of the central rod 129a and third valve body 145 at a lower end of the central rod 129a. The piston element 143 and the third valve body 145 are both provided a respective groove 147, 149 accommodating respective O-rings (not shown) to seal the piston element 143 and the third valve body 145 against the wall of the internal space 127 in a slidable manner. A second spring 150 below the piston element 143 forces the elongate pilot element 129 upwards (as seen in Figs. 7 to 9).

The second valve body 139 divides the internal space 127 into a lower first part 127a and an upper second part 127b.

A second through opening 151 is provided in the circumferential wall 107 to provide fluid connection between the first valve chamber portion 97 and the annular space 111.

Third through openings 153 in the coaxial annular wall member 119 provide fluid connection between the second valve chamber portion 99 and a dead space 155 between the coaxial annular wall member 119 and the tubular element 109.

At an upper end, opposite the end member 113, the tubular element 109 has a cylindrical, expanded portion 157 defined by a shoulder 159. A plug element 161 is slidably fitted in the expanded portion 157 and is sealed against the wall thereof by an O-ring (not shown) accommodated on a groove 163. The plug element 161 is secured by a transverse pin 165. L-shaped slots 167 in the wall of the expended portion 157 (see Fig. 5) provides for placing and maintaining the plug element 161 in different axial positions as shall be explained below. The plug element 157 comprises a vertical (as seen in Fig. 7) through channel 169 with an upper connector 171. The channel 169 opens into a cylinder space 173 between the plug element 161 and the piston element 143.

The valve 9 provides a fluid main passage via the fluid inlet 101 through the first valve chamber portion 97 and through the outlet 69, when the main valve body is in an opening position as will be explained below. To provide for connecting the valve 9 with a fluid conduit the valve 9 is attached to a skew T-shaped fitting 175 whereby nuts 177 attached to the steel mantel 63, 65 provides for fastening a leg or branch of the T-shaped fitting 175 by means of second nuts 179 and threaded rods (not shown). A cross bar of the T-shaped fitting 175 is at either end provided with a connecting piece 181 and a sleeve 183, respectively, for mutual connection of a number of such T-shaped fittings to provide a manifold connecting a number of valves 9 to a fluid conduit such as fluid conduit 11 (see Figs. 1 and 2).

The valve works as follows:

In use the valve 9 is connected to a fluid inlet conduit which is attached to the inlet 101, in the embodiment shown through the T-shaped fitting 175, and possibly to a fluid outlet conduit (not shown), which may be attached to the lower flange member 81 through an internal thread (not shown) in the tubular portion 83, which thus functions as a connector 27. A second fluid conduit, such as fluid conduit 21 is connected to the channel 169 via the connector 171.

In case of low pressure in the fluid inlet conduit the compression spring 123 will keep the main valve body 73 in its closing position as shown in Figs. 7 to 9.

When the inlet 101 is pressurized and the elongated pilot element 129 is in a closing position as shown in Figs. 7 and 8 a first passage extends from the inlet 101, through the first valve chamber portion 97, the second through opening 151, the annular space 111, the through openings 133, the lower first part 127a of the internal space 127, the vent 131, the dead space 155, and the third through openings 153 to the second valve chamber portion 99. Thus equal pressure is present in the first valve chamber portion 97, the second valve chamber portion 99 and the annular space 111. The pressure in the first valve chamber portion 97 will force the main valve body 73 upwards away from its closing position i.e. towards an opening position allowing fluid access past the sealing element 117 and out through the outlet, whereas the pressure in the second valve chamber portion 99 and in the annular space 111 will force the main valve body 73 towards the closing position. Since the relevant areas in the second valve chamber portion 99 and in the annular space 111, i.e. the areas of the flange like portion 95 and the annular connecting element 115, mainly, are larger than the relevant areas in the first valve chamber portion 97, i.e. the downwards facing area of the circumferential projection 91 and the downwards facing area or the second tubular member 105 adjacent the annular sealing element 117, mainly, a net force is acting on the main valve body 73 towards its closing position. I.e. the pressure at the inlet 101 keeps the valve 9 closed.

Further in the closing position of the elongate pilot element 129 the lower first part 127a of the internal space 127 is closed apart from said first passage.

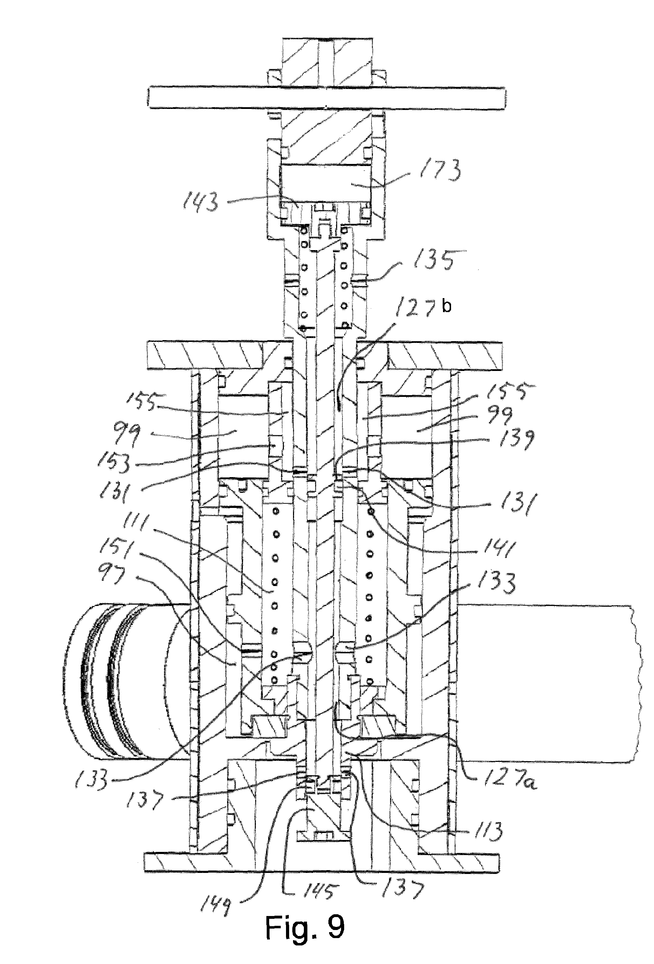

To open the valve 9 the elongate pilot element 129 is moved from its closing position shown in Figs. 7 and 8 to its opening position shown in Fig. 9. How the elongate pilot element 129 is moved will be explained further below.

When the elongate pilot element 129 is moved to its opening position mainly the second valve body 139 is moved from its closing position shown in Figs. 7 and 8 to its opening position shown in Fig. 9. Whereas the second valve body 139 in its closing position opens the first passage as explained above, in its opening position the second valve body 139 is positioned on the opposite side of the vent 131, relative to its closing position, and thus the second valve body 139 closes the first passage, but opens a second passage extending from the second valve chamber portion 99, through the third through opening 153, the dead space 155, the vent 131, the upper second part 127b of the internal space 127, and the second vent 135 to the surroundings of the valve 9.

Thus the second valve chamber portion 99 is rendered pressure-less and since the relevant area of the first valve chamber portion 97 is larger than the relevant area of the annular space 111 a net force acts on the main valve body 73 to move it away from its closing position.

It should be noted that in the situation presently discussed the force of the compression spring 123 is weak relative to the forces of the pressurised fluid at the inlet 101.

However when the elongate pilot element 129 is moved to its opening position the third valve body 145 is moved to a position in which the third vent 137 is open towards the lower first part 127a of the internal space 127. Thus a third passage exists from the annular space 111, through the through openings 133, the lower first part 127a of the internal space 127, and the third vent 137 to the surroundings of the valve 9 in the fluid outlet conduit, if present. Thus the annular space 111 is relieved of pressure enhancing the net force acting on the main valve body 73 towards its opening position. It is noted that the overall aperture of the through openings 133 are larger than the overall aperture of the second through opening 151.

When the pressure in the first valve chamber portion 97 drives the main valve body 73 towards its raised (relative to the position of the valve in Figs. 7 to 9) opening position (not shown) fluid is expelled from the second valve chamber portion 99 through the second passage and fluid is expelled from the annular space 111 mainly through the third passage.

When the main valve body 73 is moved towards its raised opening position an annular residual part of the second valve chamber portion is left between the circumferential wall 107 and the coaxial annular wall member 119 avoiding a blockage of the third through openings 153 and the main valve body 73 may be raised to an opening position in which the flange like portion 95 abuts on the sealing member 75.

For moving the elongate pilot element 129 from its closing position shown in Figs. 7 and 8 to its opening position shown in Fig. 9 the cylinder space 173 is pressurized through the channel 169 and the conduit connected threrewith. The pressure will drive the piston 143 and the rest of the elongate pilot element 129 against the force of the second spring 150 to the opening position of the elongate pilot element 129 with the piston abutting on the shoulder 159.

It is also possible manually to move the elongate pilot element 129 by actuating manually the plug element 161 via the transverse pin 165 by driving the latter through the L-shaped slots 167 to depress the piston 143 and subsequently turn the transverse pin 165 through a circumferential part of the L-shaped slots 167 into a position in which the plug element will be maintained by friction under influence of the second spring 150 through the piston 143. When the elongate pilot element 129 is thus manually brought into its opening position the opening of the valve may be assisted by pulling the transverse pin 165 upwards thus raising the tubular element 109 and the main valve body 73 together with it. This may i.a. be used for emptying the valve 9 and connected conduits.

Apart from the valve housing member 61 also main valve body 73, the tubular element 109 and the T-shaped fitting 175 may be made from glass fibre reinforced polyamide. The sealing member 75 and the coaxial annular wall member 119 may e.g. be made from a plastic material without glass reinforcement such as POM (polyoxymethylene). Other parts swept in use by the fluid passing through the valve are preferably made from acid-proof steel.

## Claims

1. A valve for opening and closing a fluid main passage, comprising: a valve housing (61, 75) with a valve chamber (71); a main valve body (73) accommodated inside the valve chamber (71); a fluid inlet (101); a fluid outlet (69), the main valve body being movable between a closing position closing the fluid main passage and an opening position, the main valve body (73) dividing the valve chamber into a first valve chamber portion (97) and a second valve chamber portion (99), the fluid inlet (101) being in fluid connection with the first valve chamber portion (97); a first passage (97,151,111,133,27a,131,155,153) between the fluid inlet (101) and the second chamber portion (99); a second valve body (139) movable between an opening position and a closing position of said second valve body; and a second passage (153,155,131,127b,135) out of the second valve chamber portion (99), said second passage being open when the second valve body is in its opening position, **characterized in that** said second valve body (139) is placed at said first passage between the fluid inlet (101) and the second valve chamber portion (99), said first passage being blocked when the second valve body (139) is in its opening position, and said first passage being open when the second valve body (139) is in its closing position.

2. A valve according to claim 1, **characterized by** a vent (131) comprising at least one aperture, said vent forming part of the first passage from the fluid inlet (101) to the second valve chamber portion (99), when the second valve body (139) is in its closing position, the second valve body (139) blocking in its opening position the passage from the fluid inlet (101) to said vent (131) while allowing passage from said vent (131) to a space (127b) in the valve blocked from the passage to the fluid inlet (101), said space (127b) being in fluid connection (135) with the surroundings of the valve, said vent and said space thereby constituting at least part of second passage.

3. A valve according to claim 2, **characterized by** a hollow element (109) with a wall, the second valve body (139) being accommodated in the hollow element (109) to divide an internal space (127) of the hollow element into a first part (127a) and a second part (127b), said vent (131) being present in the wall of the hollow element (109), the second valve body (139) providing in its closing position for connection between the vent (131) and said first part (127a), and the second valve body (139) providing in its opening position for connection between the vent (131) and said second part (127b), which constitutes said space in the valve blocked from the passage to the fluid inlet.

4. A valve according to claim 3, **characterized in that** said hollow element is a tubular element (109) having an axis (A), the second valve body (139) being axially slidable in the tubular element (109), to expose the vent (131) to said first part (127a) of the internal space or to the second part (127b) of the internal space.

5. A valve according to any of the preceding claims, **characterized by** a fluid actuated actuating element (143) connected to the second valve body (139) for moving the second valve body (139) between its opening and closing positions.

6. A valve according to claim 5, **characterized in that** the actuating element comprises a piston (143).

7. A valve according to claim 4 and 6, **characterized in that** the piston (143) is slidably accommodated in the tubular element (109) and slidably sealed against the wall of the tubular element.

8. A valve according to claim 7, **characterized in that** the tubular element (109) in sequence along its axis: accommodates the piston (143); comprises a second vent (135); comprises the first vent (131); comprises a through opening (133) in fluid connection with the fluid inlet (101); and comprises a third vent (137) in fluid connection with the surroundings of the valve, and that an elongate pilot element (129) is accommodated in the tubular element (109) and comprises: the piston (143); the second valve body (139) situated near the first vent; and a third valve body (145) situated near the third vent to open said third vent (137) towards the first part (127a) of the internal space of the tubular element when the second valve body (139) is in its opening position and to block the third vent (137) from the first part (127a) of the internal space of the tubular element when the second valve body (139) is in its closing position.

9. A valve according to claim 8, **characterized in that** the tubular element (109) at one end adjacent the piston (143) is closed by a manually actuated slidable plug element (161).

10. A valve according to any of the preceding claims, **characterized in that** the valve housing comprises a first tubular member (61), the main valve body comprises a second tubular member (105) having a first end with a first end face (95), a second end and a circumferential wall (107), the first valve chamber portion (97) being defined by the circumferential wall (107) and the second valve chamber portion (99) being defined by the first end face (95).

11. A valve according to claim 4 and 10, **characterized in that** the tubular element (109) extends axially through the second tubular member (105) to form an annular space (111) there between, said annular space being closed adjacent the second end, a coaxial annular wall member (119) of the valve housing extending slidably into the annular space (111) in a sealing manner.

12. A valve according to claim 8 and 11, **characterized by** a second through opening (151) being provided in the second tubular member (105) to constitute a part of the first passage, the first through opening (133) constituting another part of the first passage.

13. A valve according to any of claims 10 to 12, **characterized in that** said second end rests at a valve seat to close the fluid main passage when the main valve body (73) is in its closing position.
